# DEMANDE DE BREVET EUROPEEN

(11) **EP 1 193 952 A2**
(43) Date de publication de la demande: **03.04.2002**
(21) Numéro de dépôt: 01870103.7
(22) Date de dépôt: 15.05.2001
(51) Int. Cl.: H04L 29/06

(54) **Cyberoffices publics sur réseau**

(30) Priorité: 31.07.2000 BE 200000481
(71) Demandeur: ASBL Lisalisi, 1210 Bruxelles (BE)
(72) Inventeur: Botikala, Baseke, 1210 Bruxelles (BE)

(57) **Abrégé**

Il s'agit d'un intranet des CyberOffices publics du réseau fibres optiques des voies ferrées ( trains et trams) interconnectant les CyberOffices ( CyberGares, CyberTram ) et les PC des ménages en combinant, la mobilité et la portabilité virtuelle des applications bureautiques pour le grand public; les CyberOffices publics et les PC des ménages convergeant vers les disques durs des serveurs de forte capacité de notre intranet permettant ainsi au grand public sauvegarder leurs données afin d'y accéder via leur mot de passe à leurs propres données sauvegardées quelque soit le site de l'intranet.

## Description

**CyberOffices publics sur réseau CyberGares et télécomTram** sera un grand intranet couvrant les rails de trains et de trams permettant, grâce à son architecture des "LAN Client" ETHERNET convergeant vers des "LAN serveur" ETHERNET pour une combinaison de la mobilité avec la portabilité virtuelle des applications bureautiques pour le grand public sur le réseau des Fibres Optiques des voies ferrées ( trains et trams)

Le but est d'obtenir couramment dans les gares, dans les aéroports, et dans les ménages des accès constamment disponibles aux applications bureautiques sauvegardées dans des disques durs des serveur avec possibilité d'y accéder quelque soit le site de l'intranet, le public retrouvant ainsi ses propres données où qu'il se déplace ; l'impression de retrouver, dans les ménages et les aéroports du réseau Fibres Optiques des voies ferrées son propre environnement bureautique, ses propres répertoires, ses propres fichiers, ses propres données lors d'un quelconque accès aux ordinateurs de l'intranet convergeant via notre réseau grâce aux fibres optiques tractées en aérien sur les voies ferrées. Un réseau dont le public bénéficie en permanence de la collaboration étroite avec des partenaires de contenu : toutes les applications offices, les bibliothèques, les sites de e-commerce, e-business à héberger ou à y accéder et l'accès sur Internet et à toutes nouvelles Technologies d'Informations et de communications.

Le réseau des CyberOffices sera réalisé avec l'interconnexion des ordinateurs via les fibres optiques des chemins de fer et des lignes des trams, L'avantage du réseau en fibres optiques superposé au réseau ferroviaire est qu'il couvre également la quasi totalité des états qu'il traverse et le grand public profite dans les gares et les aéroports d'importante bande passante par rapport aux seuls supports traditionnellement accessibles et utilisés par le grand public. L'accès aux autres réseaux , comme sur Internet se fera aussi via des routers.

Nous vivons un siècle où la forte mobilité côtoie le développement rapide des nouvelles technologies face à des populations marginalisées, périphérisées. Un public déphasé, de plus en plus victime d'adaptation essoufflant à l'essor de ces nouvelles technologies d'informations et de communications. Les raisons de décrochage sont multiples : les raisons financières pour les uns, le manque de temps disponibles pour les autres et par conséquent, toute la population a du mal à détenir de connaissances suffisantes pour manipuler aisément ces nouveaux moyens ; d'où notre réseau constitue une valeur ajoutée de telle manière que le grand public accède chaque fois où qu'il soit à leurs propres données sauvegardées dans notre réseau où qu'il soit dans nos sites.

**CyberOffices publics sur réseau CyberGares et télécomTram** a comme objectif de faire émerger des mécanismes de solidarité socio-économique via les effets d'échelles, tremplin pour des populations involontairement exclues face à ces très importants moyens modernistes d'accès aux informations; car qui tient l'information tient le pouvoir, la liberté et le développement des nations. Une société d'information à deux vitesses est intolérable dans ce siècle moderne car il freine l'épanouissement des uns et des autres; c'est l'objet de ce projet qui profite essentiellement au grand public.

**CyberOffices publics sur réseau CyberGares et télécomTram** peut profiter énormément de l'apport des partenaires de contenus qui sont d'autres réseaux publics ou privés régionaux, Les gares et les aéroports disposent, d'espaces, d'électricité, de câblages, des signalétiques indiquant l'emplacement des CyberOffices. Leur énergie et leurs locaux servent à placer des équipements pour se connecter aux fibres optiques des voies ferrées, à placer nos serveurs, nos disques durs et à aménager les CyberOffices pour le grand public.

**CyberOffices publics sur réseau CyberGares et télécomTram** est un réseau où toutes les CyberOffices convergent vers une plate-forme centrale où y sont connectés des différents serveurs, serveurs mails, serveur Web et des serveurs pour filtrer les accès sur Internet, des programmes pour sécuriser le réseau et des serveur pour identifier le client qui accède au réseau, des disques durs pour que le public sauvegarde ses données dans le réseau dans l'intérêt du grand public. Les CyberOffices seront les PC partageables par tout public dans n'importe quelle CyberOffice de n'importe quelle gare ou aéroport.

## Revendications

1. **CyberOffices publics sur réseau CyberGares et télécomTram** concerne tous les sites CyberOffices à installer sur notre réseau ; nos sites sont dans toutes les gares, les aéroports, les ménages et tous les lieux publics via le réseau fibres optiques tractés sur le réseau ferroviaire en général ( trains et trams); le réseau en Fibres Optique offre **une architecture en anneau totalement fiable et sécuritaire du réseau.**

2. **CyberOffices publics sur réseau CyberGares et télécomTram,** pour sa fiabilité, implique un seul et un seul réseau très étendu, au moins, sur toute l'Europe, pour une véritable portabilité virtuelle des applications bureautiques d'une ville à une autre, d'un état à un autre et des ménages à nos sites, tous connectés sur le réseau de fibres optiques des chemins de fer au profit du grand public.

3. Les usagers des **CyberOffices publics sur réseau CyberGares et télécomTram,** au lieu de se déplacer avec leurs PC portables, auront non seulement la facilité de consulter leurs boîtes aux courriers électroniques mais également de profiter de portabilité virtuelles de leurs propres données sur tout type de logiciels accessibles et constamment à leur service dans n 'importe quelle site CyberGare et CyberTram ou aéroport lors de leurs déplacements.

4. Les accès aux **CyberOffices publics sur réseau CyberGares et télécomTram** se feront par des codes d'accès relevés sur des cartes prépayées. Ces cartes vendues au commerce revêtiront le temps d'accès nécessaires pour l'utilisation des CyberOffices et le paiement de la sauvegarde, de l'impression et du scanner. Le même code d'accès donne au grand public l'occasion de pouvoir utiliser le réseau dans n'importe quelle CyberOffice ou n'importe quelle site Cybergare y compris n'importe quel CyberTram.
